# EUROPEAN PATENT APPLICATION

(11) **EP 2 360 549 A2**
(43) Date of publication of application: **24.08.2011**
(21) Application number: 10006772.7
(22) Date of filing: 30.06.2010
(51) Int. Cl.: G06F 1/16, G06F 3/033

(54) **Control device**

(30) Priority: 12.02.2010 TW 99203172 U
(71) Applicant: Ektouch Co., Ltd., Tucheng City, Taipei (TW)
(72) Inventor: Pan, Tian-Fu, Tucheng City, Taipei County (TW)
(74) Representative: Glawe, Delfs, Moll

(57) **Abstract**

A control device includes a base frame, a bearing board hinged to the base frame at the top for holding an electronic device, a bracket hinged to the bearing board for supporting the bearing board on the base frame in a sloping position, a trackball device mounted in a front recess of the base frame in front of the bearing board and carrying a rolling bar in a rolling chamber thereof for rotating or moving by the user and a circuit module with a sensor module for sensing the direction and amount of rotation or displacement of the rolling bar and outputting a corresponding signal and a connection interface module for transmitting the output signal from the sensor module to the electronic device to control the cursor on the display screen of the electronic device.

## Description

This application claims the priority benefit of Taiwan patent application number 099203172, filed on February 12, 2010.

### BACKGROUND OF THE INVENTION

### 1. Field of the Invention:

The present invention relates to cursor control technology and more particularly, to a control device, which comprises an angle-adjustable bearing board for supporting an electronic device and a trackball device operable by the user to control the cursor on the display screen of the electronic device.

### 2. Description of the Related Art:

Following fast development of the modern technology and electronic industry, many different kinds of consumer electronics, such as computer, mobile telephone, digital camera, personal digital assistant, multimedia player and etc., have entered into our daily life. Nowadays, notebook computer has been intensively used by people to replace desk computer.

Further, a computer has multiple functions, bringing convenience to the user. Further, a computer may be equipped with a keyboard and/or mouse for controlling a cursor on a display screen for menu item selection, cursor dragging or other operations. When operating a computer mouse, a user may rest the wrist of the hand on the desk or a mouse pad and then move the computer mouse or click the button of the computer mouse with the fingers. However, when going to move the computer mouse over a big area, the user must lift the wrist from the desk or mouse pad. Excessive or improper use of a computer may cause pain in the wrist (the so-called carpal tunnel syndrome). In order to eliminate this problem, wrist rests are created. A wrist rest is a device used to support the wrist while typing or when using a computer mouse. However, leaning the wrists on a wrist rest for long periods can put a lot of pressure on the undersides of the wrists. This may cause carpal tunnel syndrome to develop. Actually, a wrist rest does help align the user's hands and wrists while mousing. Further, an improperly used wrist rest may actually cause more repetitive stress injuries for those who mouse for extended periods of time.

Further, when using a notebook computer outdoor, the user may hold the notebook computer with one hand and operate the notebook computer with the other hand, or directly put the notebook computer on the lap for operation. Using a notebook computer in this manner is not comfort. The user's hand will become stiff or get pain soon. Further, after a long use of a notebook computer, much waste heat will be produced. Directly put a notebook computer on the lamp hinders heat dissipation. Accumulation of waste heat in a notebook computer will affect normal functioning and stability of the internal component parts.

Therefore, it is desirable to provide an orthopedically engineered control device that eliminates the aforesaid problems.

### SUMMARY OF THE INVENTION

The present invention has been accomplished under the circumstances in view. It is one object of the present invention to provide a control device, which is orthopedically engineered for comfortable use. It is another object of the present invention to provide a control device, which facilitates heat dissipation.

To achieve these and other objects of the present invention, a control device comprises a base frame, a bearing board hinged to the base frame at the top for holding an electronic device, a bracket hinged to the bearing board for supporting the bearing board on the base frame in a sloping position, and a trackball device mounted in a front recess of the base frame in front of the bearing board for operation by the user to control the cursor on the display screen of the electronic device being carried on the bearing board.

Further, the bearing board carries at least one heat transfer member prepared from aluminum alloy or copper alloy for direct contact of the electronic device being placed on the bearing board for quick dissipation of waste heat from the electronic device.

Further, the base frame comprises an accommodation open chamber adapted for accommodating a power control module, a cooling fan and/or any supplementary cooler module means, and a cover plate covering the accommodation open chamber. The cover plate has a plurality of locating members arranged on the top side thereof. The bracket has coupling end portions disposed at one side and pivotally coupled to the bottom wall of the bearing board, and a support portion disposed at an opposite side and adapted for selectively stopping at the locating members to support the bearing board in one of a series of angular positions.

Further, the base frame has a cushion pad detachably mounted on the bottom wall thereof. When the control device is rested on the user's lap, the cushion pad provides an excellent shock absorbing and buffering effect so that the user can operate the electronic device comfortably. The cushion pad comprises a plurality of hook members bilaterally arranged at the top side thereof for mounting. The base frame comprises two retaining rod members adapted for engaging the hook members of the cushion pad to secure the cushion pad, and two operating knobs operable to release the retaining rod members from the hook members of the cushion pad.

### BRIEF DESCRIPTION OF THE DRAWINGS

FIG. 1 is an elevational view of a control device in accordance with the present invention.
FIG. 2 is an exploded view of the control device in accordance with the present invention.
FIG. 3 is another exploded view of the control device in accordance with the present invention when viewed from another angle.
FIG. 4 is a sectional side view of the control device in accordance with the present invention.
FIG. 5 is a schematic top view of the present invention, showing an electronic device supported on the bearing board and operated.

### DETAILED DESCRIPTION OF THE PREFERRED EMBODIMENT

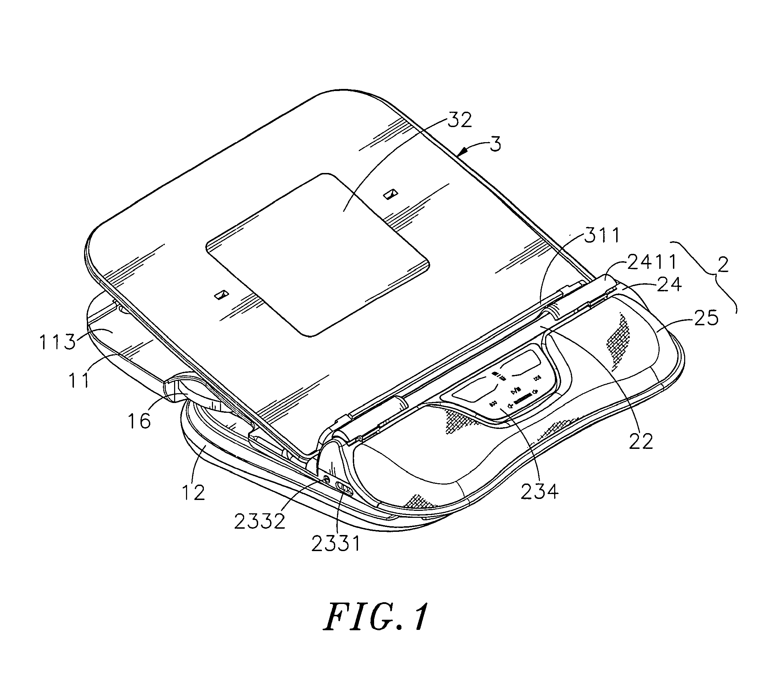

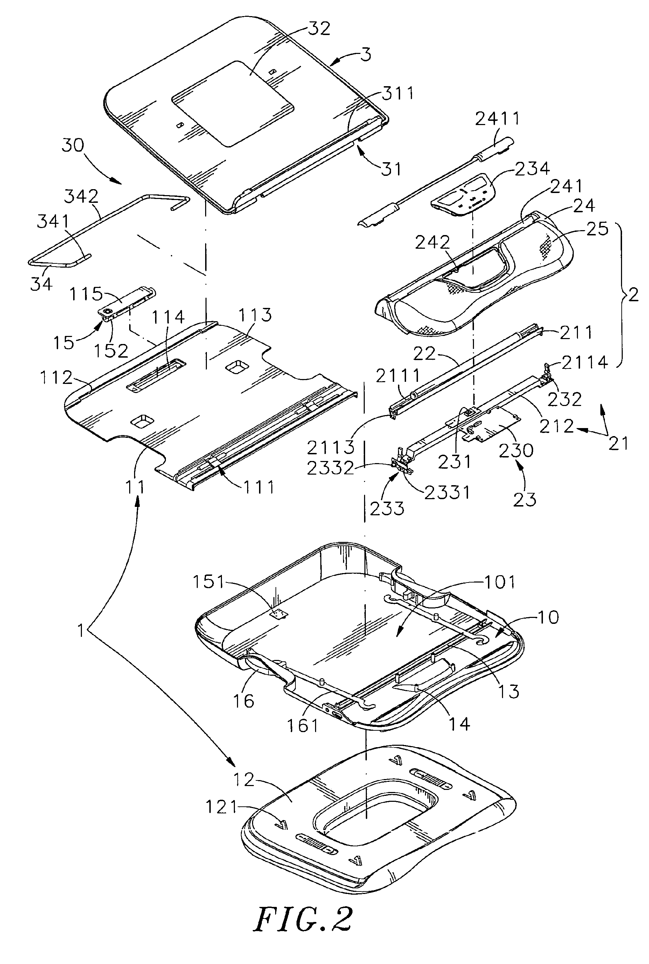

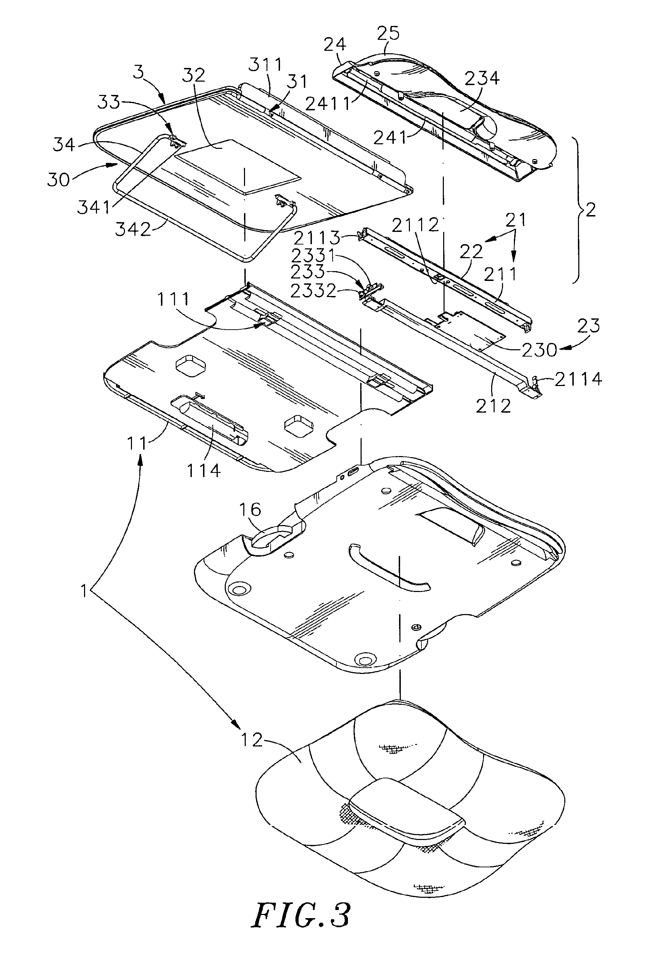

Referring to FIGS. 1, 2 and 3, a control device in accordance with the present invention is shown comprising a base frame **1**, a trackball device **2** and a bearing board **3**.

The base frame **1** has a front recess **10**, an accommodation open chamber **101** disposed behind the front recess **10,** a cover plate **11** covered on the accommodation open chamber **101** behind the front recess **10**, a cushion pad **12** attached to the bottom side thereof and a positioning member **13** and a plurality of posts **14** disposed in the front recess **10..** The cover plate **11** has at least one, for example, a plurality of pivot holders **111** mounted thereon at a front side and aligned in line adjacent to the front recess **10**, a recessed top bearing wall **113** and locating members **112** disposed in the rear side of the recessed top bearing wall **113** remote from the pivot holders **111**.

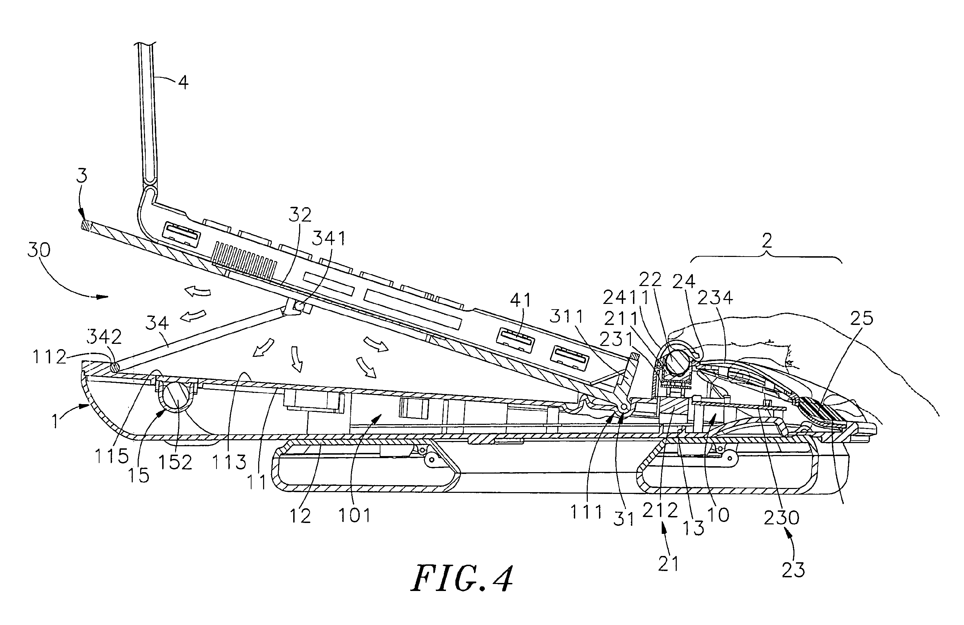

The trackball device **2** is accommodated in the front recess **10** of the base frame **1**, comprising a rolling bar holder **21**, a rolling bar **22**, a circuit module **23** and a cover shell **24**. The rolling bar holder **21** consists of a first holder shell **211** and a second holder shell **212**. The first holder shell **211** has a rolling chamber **2111** defined therein for receiving the rolling bar **22,** a through hole **2112** in communication between the rolling chamber **2111** and the front recess **10** of the base frame **1**, two retaining notches **2113** respectively located on the two distal ends thereof, and two push rods **2114** respectively fastened to the retaining notches **2113.** Further, the circuit module **23** comprises a circuit board **230**, a sensor module **231** installed in the circuit board **230** and aimed at the through hole **2112** of the first holder shell **211** and adapted for sensing the direction and amount of movement of the rolling bar **22** in the rolling chamber **2111,** a plurality of control switches **232** mounted in the two distal ends of the second holder shell **212** and respectively kept in contact with the push rods **2114,** a connection interface module **233** adapted for communication with an interface port **41** of an electronic device **4** (see FIG. 4) for signal transmission, and a touch panel **234** for touch control. The cover shell **24** is covered on the rolling bar holder **21**, having an opening **241** for the positioning of the first holder shell **211** of the rolling bar holder **21** and mounted with a shield **2411** that keeps the rolling bar **22** in the rolling chamber **2111** of the first holder shell **211** and allows a part of the rolling bar **22** to be exposed to the outside, a recessed chamber **242** disposed in front of the opening **241** for the mounting of the touch panel **234**, and a wrist rest pad **25** covered on the top wall thereof around the touch panel **234** in the recessed chamber **242**.

The bearing board **3** comprises a plurality of knuckles **31** transversely arranged in line at the front side thereof and coupled to the at least one pivot member **111** of the cover plate **11** of the base frame **1**, an upright stop flange **311** extending along one side of the knuckles **31**, at least one heat transfer member **32** disposed remote from the knuckles **31**, two pivot connectors **33** symmetrically arranged at two opposite lateral sides relative to the at least one heat transfer member **32** and a bracket **34** coupled between the pivot connectors **33** and the base frame **1**. The bracket **34** comprises two coupling end portions **341** bilaterally disposed at one side and respectively pivotally coupled to the pivot connectors 33, and a support portion **342** disposed at an opposite side for positioning in the locating members **112** of the cover plate **11**. Thus, the bracket **34** can be biased relative to the cover plate **11** to lift the bearing board **3** from the cover plate **11** and to support the bearing board 3 above the cover plate **11** in a sloping position, leaving a heat dissipation space **30** between the cover plate **11** and the bearing board 3.

When assembling the control device, put the trackball device **2** in the front recess **10** of the base frame **1** to force the second holder shell **212** of the rolling bar holder **21** into engagement with the positioning member **13** in the front recess **10** of the base frame **1**, and then fasten the circuit board **230** of the circuit module **23** to the posts **14** in the front recess **10** of the base frame **1** by, for example, screws. Alternatively, the circuit board **230** can be affixed to the rolling bar holder **21** by screws or any of a variety of other fastening measures. Thereafter, cover the cover shell **24** on the rolling bar holder **21** and fixedly fasten the cover shell **24** to the base frame **1**, and then insert a pivot pin (not shown) through the knuckles **31** of the bearing board **3** and the pivot holders **111** of the cover plate **11** to pivotally couple the bearing board **3** to the cover plate **11** of the base frame **1**, and then turn the bearing board **3** downwards to let the bearing board **3** be closely attached to the cover plate **11** and the bracket **34** be received in the recessed top bearing wall **113** of the cover plate **11**.

Further, the accommodation open chamber **101** of the base frame **1** accommodates a power control module **15**. It is to be understood that a cooling fan or cooler module may be mounted in the accommodation open chamber **101** of the base frame **1** for quick dissipation of waste heat during operation of the control device. The power control module **15** comprises a circuit board **151** and a battery **152**. Further, the power control module **15** is electrically connected to the circuit module **23** of the trackball device **2** to provide the circuit module **23** with the necessary working voltage. Further, the cover plate **11** provides a battery chamber **114**, which accommodates the battery **152** of the power control module **15**. The battery chamber **114** is covered by a lid **115**. Further, the cushion pad **12** has a plurality of hook members **121** bilaterally disposed at the top side thereof. Further, the base frame 1 comprises two retaining rod members **161** adapted for engaging the hook members **121** to secure the cushion pad **12**, and two operating knobs **16** operable to release the retaining rod members **161** from the hook members **121** of the cushion pad **12**. In one alternate form of the present invention, the cushion pad **12** can be directly bonded to the base frame **1**. Further, the cushion pad **12** can be prepared from EVA (ethylene vinyl acetate), PU (polyurethane), silicon rubber or any shock absorbing material.

Further, the sensor module **231** of the aforesaid circuit module **23** is adapted for sensing the direction and amount of movement (rotation and axial displacement) of the rolling bar **22** in the rolling chamber **2111.** With respect to how the sensor module **231** generates and emits light and receives refracted image, and how the displacement of the rolling bar **22** in X-axis and Y-axis is counted and measured, it is of the known art and no further detailed description in this regard is necessary. Further, the connection interface module **233** can be communicated with the interface port **41** of the electronic device **4** by a wired or wireless communication method for signal transmission, i.e., the connection interface module **233** can be a USB or PS2 interface, or a radio-frequency, Bluetooth or infrared communication interface. Preferably, Bluetooth communication technique is employed for enabling the connection interface module **233** to communicate with the interface port **41** of the electronic device **4** wirelessly. Further, a power switch **2331** and a Bluetooth switch **2332** are installed in the connection interface module **233** for power on/off control and Bluetooth function on/off control respectively. Further, the bearing board **3** can be prepared from plastics, aluminum or copper. The heat transfer member **32** can be prepared from aluminum or copper alloy and made in the form of a heat transfer block or heat sink with radiation fins. The heat transfer member **32** can be formed integrally with the bearing board **3**. Alternatively, the heat transfer member **32** can be separately made and then affixed to the bearing board **3** with screws or by any of a variety of known mounting techniques.

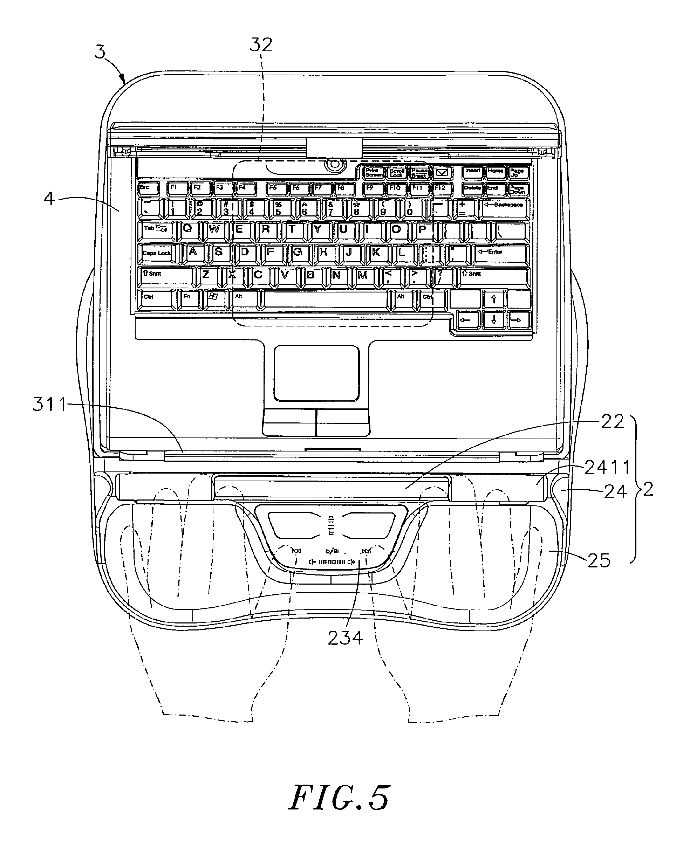

Referring to FIGS. 4 and 5 and FIGS. 2 and 3 again, the control device of the present invention can be placed on a desk, table, or the user's lap. During use of the control device, turn the bearing board **3** upwards relative to the pivot holders **111** of the cover plate **11**, and then turn the bracket **34** outwards to stop the support portion **342** against the locating members **112** of the cover plate **11**. Further, the locating members 112 of the cover plate 11 can be locating grooves or locating blocks aligned in a line. Further, the electronic device **4** to be supported on the bearing board **3** can be a mobile electronic device, such as notebook computer, PDA, multimedia device. When the electronic device **4** is placed on the bearing board **3** that is supported by the bracket **34** in a sloping position above the cover plate **11**, the upright stop flange **311** of the bearing board **3** stops the electronic device **4** in place. Further, the upright stop flange **311** may be covered with a layer of anti-slip pad or covering. At this time, the user can rest the wrists of the hands on the wrist rest pad **25** and operate the trackball device **2** in controlling the operation of the electronic device **4**. When the control device is rested on the user's lap, the cushion pad **12** provides an excellent shock absorbing and buffering effect so that the user can operate the electronic device **4** comfortably.

When the user's wrists are resting on the wrist rest pad **25**, the user can rotate the rolling bar **22** in the rolling chamber **2111** of the first holder shell **211** of the rolling bar holder **21** or move the rolling bar **22** in the rolling chamber **2111** in the axial direction conveniently with the fingers. At this time, the sensor module **231** of the circuit module **23** detects and measures the direction and amount of rotation or displacement of the rolling bar **22** for controlling direction and amount of displacement of the cursor on the display screen of the electronic device **4**. Through the through hole **2112** on the first holder shell **211** of the rolling bar holder **21**, the sensor module **231** can sense rotation or displacement of the rolling bar **22** positively. The orthopedically engineered design of the control device enables the user to operate the electronic device **4** comfortably for a long period of time without causing hand pain or stiffness. Further, the rolling bar **22** is prepared from a self-lubricating material for the advantage of low friction resistance and high stability.

When the user moves the rolling bar **22** axially leftward or rightward, the rolling bar **22** will push one push rod **2114** at the second holder shell **212** to trigger the corresponding control switch **232**, causing the control switch **232** to control displacement of the cursor on the display screen of the electronic device in X-axis direction. Further, spring members (not shown) may be provided at the bottom side of the first holder shell **211** to support the first holder shell **211** above the second holder shell **212**. When the user presses the rolling bar **22**, the first holder shell **211** is lowered to compress the spring members and to further cause the corresponding control switch **232** at the circuit board **230** to be triggered in driving the cursor to click on a menu. Further, during downward displacement of the first holder shell **211**, the user can simultaneously rotate the rolling bar **22** or move it axially to scroll a webpage, to drag an object or to select a menu item on the display screen of the electronic device **4**. When the user releases the hands from the rolling bar **22**, the first holder shell **211** is immediately returns to its former position above the second holder shell **212** by the spring members.

Further, the touch panel **234** of the circuit module **23** is exposed to the outside of the rolling bar holder **21**, having a plurality of function keys for different input modes, such as press button mode, webpage scroll mode, drag mode or cursor control mode. Thus, the user can touch the touch panel **234** with the fingers to move the cursor or picture on the display screen of the electronic device **4**, and to operate the function keys to run the functions like the functioning of the left button or right button of a computer mouse or to run "play", "pause", "forward", "backward", "volume up" or "volume down" or to set brightness or contrast.

Further, the motherboard and electronic components of the electronic device **4** are arranged at the bottom side inside the electronic device **4**. After a long operation, the temperature inside the electronic device **4** will increase. Accumulation of waste heat in the electronic device **4** will affect normal functioning and stability of the internal electronic components. The invention avoids occurrence of this problem. When the electronic device **4** is carrying on the bearing board **3**, the bottom wall of the electronic device **4** is kept in close contact with the heat transfer member **32** so that the heat transfer member **32** transfer waste heat from the electronic device **4** for quick dissipation by outside cooling air that circulates through the heat dissipation space **30** between the cover plate **11** and the bearing board **3**. By means of the functioning of the heat transfer member **32**, it is not necessary to install extra cooling fans or cooler module means, saving the space and minimizing the device weight to satisfy small size requirement.

As stated above, the invention provides a control device applicable for use with a notebook computer, mobile telephone or any of a variety of electronic devices **4**. By means of the bracket **34** to support the bearing board **3** in a sloping position, the user can operate the electronic device **4** on the bearing board **3** or watch the display screen of the electronic device **4** conveniently and comfortably. Further, by means of the heat transfer member **32**, the control device dissipates waste heat from the electronic device 4 rapidly. Further, the locating members **112** may be spaced on the recessed top bearing wall **113** for selectively supporting the support portion **342** of the bracket **34** to hold the bracket **34** in one of a series of angles. Further, gear means may be provided between the knuckles **31** of the bearing board **3** and the pivot holders **111** of the cover plate **11** of the base frame **1** and operated to adjust the angular position of the bearing board **3** relative to the cover plate **11**. Further, mouse, trackball mouse, touch panel or any of a variety of other cursor control means may be used to substitute for the trackball device **2**. Further, the rolling bar **22** can be made in the form of a trackball or any of a variety of other designs movable in X-axis and Y-axis directions for detection by the sensor module **231** and for enabling the detected signal to be transmitted to the electronic device **4** through the connection interface module **233**.

A prototype of control device has been constructed with the features of FIGS. 1∼5. The control device functions smoothly to provide all of the features disclosed earlier.

Although a particular embodiment of the invention has been described in detail for purposes of illustration, various modifications and enhancements may be made without departing from the spirit and scope of the invention. Accordingly, the invention is not to be limited except as by the appended claims.

### List of reference symbols

| Applicant : EKTOUCH CO., LTD. | |
|---|---|
| Patent Title : CONTROL DEVICE | |
| 1- base frame | 2- trackball device |
| 10- front recess | 21- rolling bar holder |
| 101- accommodation open chamber | 211- first holder shell |
| 11- cover plate | 2111- rolling chamber |
| 111- pivot holder | 2112- through hole |
| 112- locating member | 2113- retaining notch |
| 113- recessed top bearing wall | 2114- push rod |
| 114- battery chamber | 212- second holder shell |
| 115- lid | 22- rolling bar |
| 12- cushion pad | 23- circuit module |
| 121- hook member | 230- circuit board |
| 13- positioning member | 231- sensor module |
| 14- post | 232- control switches |
| 15- power control module | 233- connection interface module |
| 151- circuit board | 2331- power switch |
| 152- battery | 2332- Bluetooth switch |
| 16- operating knob | 234- touch panel |
| 161- retaining rod member | 24- cover shell |
| | 241- opening |
| | 2411- shield |
| | 242- recessed chamber |
| | 25- wrist rest pad |
| 3- bearing board | 4- electronic device |
| 30- heat dissipation space | 41- interface port |
| 31- knuckles | |
| 311- upright stop flange | |
| 32- heat transfer member | |
| 33- pivot connector | |
| 34- bracket | |
| 341- coupling end portion | |
| 342- support portion | |

## Claims

1. A control device adapted for controlling a cursor on a display screen of an electronic device, comprising:
a base frame ( 1 ) , said base frame ( 1 ) comprising a front recess ( 10 ) and at least one pivot holder (111) disposed behind said front recess ( 10 ) ;
a trackball device ( 2 ) mounted in said front recess ( 10 ) of said base frame ( 1 ) , said trackball device ( 2 ) comprising a rolling bar holder ( 21 ) , said rolling bar holder ( 21 ) defining therein a rolling chamber ( 2111 ) and a through hole ( 2112 ) , a rolling bar ( 22 ) rotatably and axially slidably accommodated in said rolling bar holder( 21 ), and a circuit module( 23 ), said circuit module ( 23 ) comprising a circuit board ( 230 ) , a sensor module ( 231 ) installed in said circuit board ( 230 ) and aimed at said through hole ( 2112 ) of said rolling bar holder ( 21 ) and adapted for sensing the direction and amount of movement of said rolling bar ( 22 ) in said rolling chamber ( 2111 ) and providing a corresponding signal indicative of the direction and amount of movement of said rolling bar ( 22 ) in said rolling chamber ( 2111 ) and a connection interface module ( 233 ) adapted for transmitting the output signal from said sensor module ( 231 ) to an external electronic device ( 4 ) ; and
a bearing board ( 3 ) mounted on said base frame (1) and adapted for carrying an electronic device ( 4 ) , said bearing board (3) comprising a plurality of knuckles ( 31 ) arranged at a front side thereof and pivotally connected to said pivot holders ( 111 ) of said base frame ( 1 ) and a bracket ( 34 ) pivotally connected to a bottom wall thereof and adapted for stopping against a part of said base frame ( 1 ) to support said bearing board ( 3 ) on said base frame ( 1 ) in a sloping position.

2. The control device as claimed in claim 1, wherein said base frame ( 1 ) comprises an accommodation open chamber ( 101 ) that accommodates a power control module( 15 ) that is electrically connected to said trackball device( 2 ) to provide electricity to said trackball device ( 2 ) , and a cover plate (11) covering said accommodation open chamber ( 101) .

3. The control device as claimed in claim 2, wherein said power control module ( 15 ) comprises a circuit board ( 151 ) and a battery( 152 ); said cover plate( 11) comprises a battery chamber (114) that accommodates said battery ( 152) , and a lid ( 115 ) covering said battery chamber (114) .

4. The control device as claimed in claim 1, further comprising a cushion pad ( 12 ) attached to a bottom wall of said base frame ( 1 ) , said cushion pad ( 12 ) being prepared from a material group consisting of ethylene vinyl acetate, polyurethane and silicon rubber.

5. The control device as claimed in claim 4, wherein said cushion pad ( 12 ) comprises a plurality of hook members ( 121 ) bilaterally arranged at a top side thereof; said base frame ( 1 ) comprises two retaining rod members ( 161 ) adapted for engaging the hook members ( 121 ) of said cushion pad ( 12 ) to secure said cushion pad ( 12 ) and two operating knobs ( 16 ) operable to release said retaining rod members ( 161 ) from said hook members ( 121 ) of said cushion pad ( 12 ).

6. The control device as claimed in claim 4, wherein said rolling bar holder ( 21 ) of said trackball device ( 2 ) comprises a first holder shell ( 211 ) defining therein said rolling chamber ( 2111) and said through hole ( 2112 ) , two retaining notches ( 2113 ) respectively located on two distal ends thereof, and two push rods ( 2114 ) respectively fastened to said retaining notches ( 2113 ) ; the circuit board ( 230 ) of said circuit module (23) of said trackball device ( 2 ) comprises a plurality of control switches ( 232 ) operable by said push rods ( 2114 ) to output a respective control signal.

7. The control device as claimed in claim 6, wherein said trackball device ( 2 ) further comprises a cover shell ( 24 ) covered on said rolling bar holder ( 21 ) , said cover shell ( 24 ) having an opening ( 241 ) for the positioning of said first holder shell ( 211 ) of said rolling bar holder ( 21 ) and mounted with a shield ( 2411) that keeps said rolling bar ( 22 ) in said rolling chamber ( 2111 ) and allows a part of said rolling bar ( 22 ) to be exposed to the outside of said trackball device ( 2 ) , a recessed chamber (242) disposed in front of said opening ( 241 ) , a touch panel ( 234 ) accommodated in said recessed chamber ( 242 ) , and a wrist rest pad ( 25 ) covered on a top wall thereof around said touch panel ( 234 ).

8. The control device as claimed in claim 1, wherein said connection interface module ( 233 ) is a wireless transmission interface selected from a group of infrared, Bluetooth and radio frequency transmission interface means.

9. The control device as claimed in claim 1, wherein said connection interface module ( 233 ) is a wired transmission interface selected from one of universal serial bus and PS2 interface means.

10. The control device as claimed in claim 1, wherein said bearing board ( 3) comprises an upright stop flange ( 311 ) disposed at one lateral side relative to said trackball device ( 2 ) and adapted for stopping an electronic device ( 4 ) on said bearing board ( 3 ) .

11. The control device as claimed in claim 1, wherein said base frame ( 1 ) comprises a plurality of locating members ( 112 ) disposed remote from said pivot holders ( 111 ) ; said bearing board ( 3 ) comprises two pivot connectors ( 33 ) located on the bottom wall thereof; said bracket ( 34 ) comprises two coupling end portions ( 341 ) bilaterally disposed at one side thereof and respectively pivotally coupled to said pivot connectors ( 33 ) of said bearing board ( 3 ) and a support portion ( 342 ) disposed at an opposite side thereof for selectively stopping against said locating members ( 112 ).

12. The control device as claimed in claim 1, wherein said bearing board ( 3 ) carries at least one heat transfer member ( 32 ) adapted for transferring waste heat from the electronic device ( 4 ) being carried on said bearing board ( 3 ) for dissipation through a heat dissipation space ( 30 ) defined between said bearing board ( 3 ) and said base frame ( 1 ) when said bearing board ( 3 ) is supported on said base frame ( 1 ) by said bracket ( 34 ) in a sloping position.

13. The control device as claimed in claim 12, wherein each said heat transfer member ( 32 ) is prepared from a material group consisting of aluminum, copper, aluminum alloy, copper alloy and their combination.

14. The control device as claimed in claim 1, wherein said bearing board ( 3 ) is prepared from a material group consisting of plastics, aluminum, copper, aluminum alloy and copper alloy.
